# EUROPEAN PATENT APPLICATION

(11) **EP 2 549 417 A1**
(43) Date of publication of application: **23.01.2013**
(21) Application number: 12003992.0
(22) Date of filing: 22.05.2012
(51) Int. Cl.: G06Q 10/08

(54) **Business outcome tradeoff simulator**

(30) Priority: 22.07.2011 US 201161510992 P
(71) Applicant: Accenture Global Services Limited, Dublin 4 (IE)
(72) Inventor: Perry, William P., Marietta, Georgia 30068-1551 (US); Miller, Jeffrey Scott, Fairfax Station, Virginia 22039 (US); Ferriola, Robert Edward, Chesterbrook, Pennsylvania 19087 (US); Hoover, James Hendry, Mechanicsburg, Pennsylvania 17050 (US); McHugh, Brigid Kathleen, Alpharetta, Georgia 30004 (US)
(74) Representative: Müller-Boré & Partner Patentanwälte

(57) **Abstract**

Methods, systems, and apparatus, including computer programs encoded on a computer storage medium, for selecting a forecastability strategy from among a group of forecastability strategies based on business outcomes. A group of predefined forecastability strategies is received along with historical supply chain management data. Each forecastability strategy represents a set of rules by which to determine whether each item of a plurality of items within a supply chain management system is to be managed using statistical forecasting. The historical supply chain management data represents past events in a supply chain associated with at least two items selected from the plurality of items within the supply chain management system. Each of the forecastability strategies is applied to the historical data in order to generate business outcomes for each of the forecastability strategies. A forecastability strategy is selected based on the business outcomes and implemented to manage each of the items within the supply chain management system.

## Description

### GOVERNMENT LICENSE RIGHTS

This invention was made with government support under SP4701-07-A-0001 awarded by the U.S. Defense Logistics Agency (DLA). The government has certain rights in the invention.

### FIELD

This disclosure relates to supply chain management systems and the process for determining whether an item managed by the system should be forecasted using a statistical forecast model.

### BACKGROUND

Supply chain management (SCM) systems use rules to determine optimal timing for ordering items, where those items are typically put into inventory. One of the features that SCM systems implement is forecasting the purchasing criteria for certain items being managed. Items managed by the system are determined to be forecastable or not-forecastable. Forecastability of an item in current SCM systems may be determined based on one of several techniques that analyze characteristics associated with the item to test whether the item is forecastable. One such conventional technique is the "4 for 10 approach" which utilizes months of demand and total quantity of demand. If an item passes the test, it's considered forecastable, and an advanced statistical forecast model is used to predict future demand and future replenishment plans. If an item does not pass the particular test used to determine forecastability, it's considered not-forecastable and is managed based on for example min/max levels. However, conventional forecastability rules do not provide a clear linkage to business outcomes. In addition, practical application in real world supply chain management operations shows a high variability in forecasts from month to month. A new approach is needed to determine whether an item should be deemed forecastable or not that is better correlated to business outcomes and allows for higher levels of precision for managing items.

### SUMMARY

In one general aspect, a method includes receiving a group of predefined forecastability strategies and historical supply chain management data. Each forecastability strategy represents a set of rules by which to determine whether each item of a plurality of items within a supply chain management system is to be managed using statistical forecasting. The historical supply chain management data represents past events in a supply chain associated with at least two items selected from the plurality of items within the supply chain management system. Each of the forecastability strategies is applied to the historical data in order to generate business outcomes for each of the forecastability strategies. Based on the business outcomes, a forecastability strategy is selected from among the group of forecastability strategies and implemented within the supply chain management system to manage each of the plurality of items.

In some implementations, each of the forecastability strategies may be applied to the historical data by simulating inventory management of each item for each forecastability strategy. For each item, a forecasting model or non-forecasting rule may be selected for inventory management of that item according to the particular forecastability strategy. Inventory management of that item may be simulated according to the selected model or rule over a period of time represented by the historical data, generating one or more business outcomes.

Generating the business outcomes for each of the forecastability strategies may involve, for each forecastability strategy, aggregating the business outcomes based on the simulated inventory management of each of the selected items according to the particular forecastability strategy.

Simulating inventory management over a period of time may represent iterating the inventory management over a plurality of management cycles and using the simulated results of each cycle to simulate the results of the next cycle. The period of time for simulating inventory management may be at least a year.

In some implementations, generating business outcomes includes generating a score representing a weighted average of two or more business characteristics, and the generated scores are compared to select the forecastability strategy.

The business outcome characteristics may include at least one of average inventory, number of backorders, average customer wait time, number of purchase requisitions, and value of purchase requisitions. Each business outcome characteristic may be normalized according to a median value for that characteristic.

The method may also include receiving user input specifying the weights to use for each business outcome characteristic, which are then used to generate the weighted average.

In some implementations, selecting a forecastability strategy may further include reporting business associated with each of the forecastability strategies to a user, and receiving user input representing a selection of the forecastability strategy.

Implementing the selected strategy may include selecting a forecasting model or non-forecasting rule for each item for inventory management of that item according to the selected forecastability strategy. The selected forecastability strategy may include first and second criteria. Items meeting the first criterion may be evaluated according to a first forecasting model, items meeting a second criterion may be evaluated according to a second forecasting model, and at least some items not meeting either criteria may be evaluated according to a non-forecasting rule. The second forecasting model may be a simple moving average statistical model.

In some implementations, the business outcomes for each forecastability strategy may be compared against business outcomes for a baseline strategy using one or more non-forecasting rules

In another general aspect, a system includes a data repository, a simulation engine, one or more computers, and one or more storage devices. The data repository stores historical supply chain management data representing past events associated with a plurality of items within a supply chain management system. The simulation engine receives a group of predefined forecastability strategies, accesses the historical management data, and applies each of the forecastability strategies to the historical data in order to generate business outcomes for each of the forecastability strategies. The one or more storage devices store instructions that are operable, when executed by the one or more computers, to cause the one or more computers to perform operations including selecting a forecastability strategy from among the group of forecastability strategies based on the business outcomes generated by the simulation engine and implementing the selected forecastability strategy to manage each of the plurality of items within the supply chain management system.

In some implementations, the simulation engine may apply each of the forecastability strategies to the historical data by simulating, for each forecastability strategy, inventory management of at least two items from the plurality of items. For each item, the simulation engine selects a forecasting model or non-forecasting rule for inventory management of that item according to the particular forecastability strategy. The engine simulates inventory management of that item according to the selected model or rule over a period of time represented by the historical data and generates one or more business outcomes.

In some implementations, the simulation engine may generate a score representing a weighted average of two or more business characteristics, and the one or more computers may select a forecastability strategy by comparing the generated scores.

The business outcome characteristics may include at least one of average inventory, number of backorders, average customer wait time, number of purchase requisitions, and value of purchase requisitions.

The simulation may receive user input specifying the weights to use for each business outcome characteristic and may use the specified weights to generate the weighted average.

In another general aspect, a non-transitory computer-readable medium stores software comprising instructions executable by one or more computers. Upon executing the instructions, the one or more computers receive a group of predefined forecastability strategies and historical supply chain management data. Each forecastability strategy represents a set of rules by which to determine whether each item of a plurality of items within a supply chain management system is to be managed using statistical forecasting. The historical supply chain management data represents past events in a supply chain associated with at least two items selected from the plurality of items within the supply chain management system. The one or more computers apply each of the forecastability strategies to the historical data in order to generate business outcomes for each of the forecastability strategies. Based on the business outcomes, a forecastability strategy is selected from among the group of forecastability strategies and implemented within the supply chain management system to manage each of the plurality of items.

Each of the implementations and examples described herein may be embodied in methods, systems, and apparatus, including computer programs encoded on a computer storage medium.

The details of one or more implementations are set forth in the accompanying drawings and the description, below. Other potential features and advantages of the disclosure will be apparent from the description and drawings.

### BRIEF DESCRIPTION OF THE DRAWINGS

FIGS. 1, 5, and 6 are diagrams of exemplary systems.

FIG. 2 illustrates exemplary business outcome characteristics.

FIG. 3 is a flowchart of an exemplary process.

FIG. 4 illustrates exemplary business outcome characteristic weights.

### DETAILED DESCRIPTION

Generating a statistical forecast for an item can consume significant human and data processing resources. Organizations, therefore, typically classify items as either forecastable or non-forecastable, to reduce the number of items for which statistical forecasts are performed. Statistical forecasts can be generated for items that are classified as forecastable, and items that are classified as non-forecastable can be managed in a different manner, such as using a simple business rule which requires less data processing and less human interaction than a statistical forecast. An example of a simple business rule is ordering a quantity of twenty units of an item if the on-hand quantity of the item reaches six units.

Such a business rule can be referred to as a "min/max" rule. With a "min/max" rule, when the inventory level of an item goes down to a pre-specified minimum level, a predefined quantity of units is ordered to replenish the item. The quantity can be selected to provide a balanced quantity that best minimizes both the purchasing cost and the carrying cost for the inventory. "Max" refers to a maximum quantity, such as a maximum quantity of the item. "Max" represents the quantity desired to be available after a replenishment order is received.

As another example, determining whether an item is forecastable can be based on a simple business rule or a simple statistic. For example, historical ordering activity for an item can be examined, and if in the past twelve months there have been at least four demands (e.g. orders) for the item and if the total quantity of the demand for the item is at least ten units, then the item can be classified as forecastable. If there have been less than four demand occurrences or less than ten units of demand for the item, the item can be classified as non-forecastable. As another example, determining whether an item is forecastable can be based on calculating a coefficient of variation statistic. If the coefficient is less than a threshold, the item can be classified as forecastable, and if the coefficient is at or above the threshold, the item can be classified as non-forecastable.

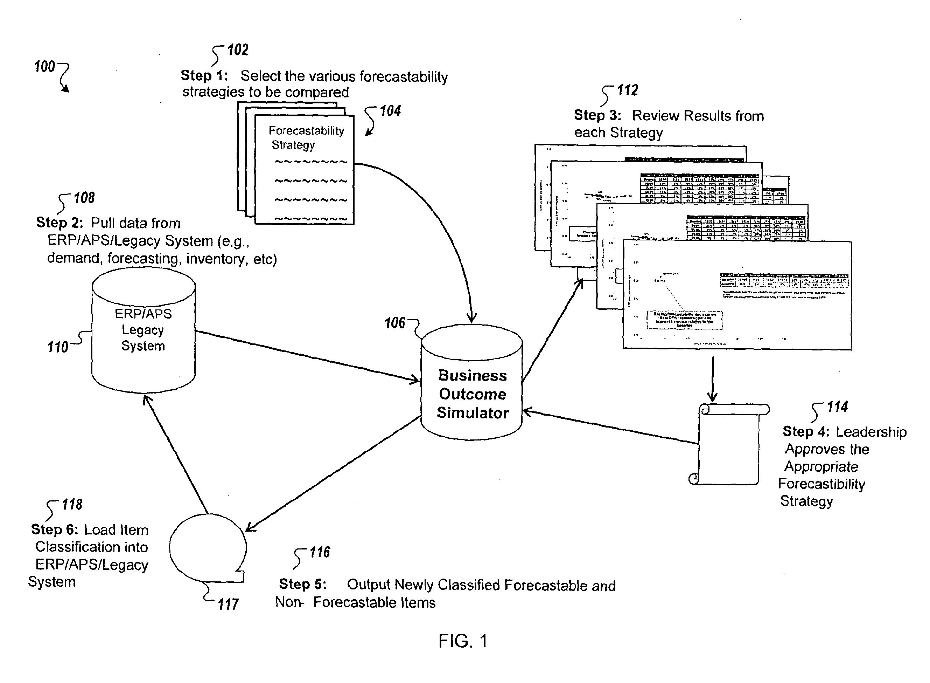

As another example of determining forecastability, a strategy for determining forecastability can be selected, among other strategies, based on a measure of how each strategy affects a business outcome for the organization. For example, as illustrated in a system 100 in FIG. 1, in a first step, step one 102, different forecastability strategies 104 to be compared can be selected. The forecastability strategies 104 can include, for example, complex forecast models, simple forecast models, simple Min/Max rules, and other business rules. Each forecastability strategy mat include multiple forecasting models and non-forecasting rules, and may apply a number of rules to determine which forecasting model or non-forecasting rule to apply to each item. For each forecastability strategy, a model or rule is applied to generate a forecast for an item, such as using an algorithm and/or using software provided by a software vendor.

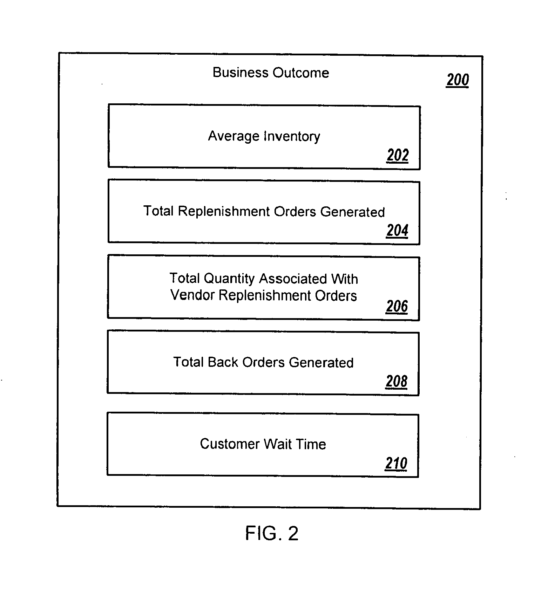

Regardless of the model or rule applied to manage an item, a business outcome can be associated with a decision of selecting that model or rule for management of that item. For example, as shown in FIG. 2, a business outcome 200 can be defined as a function of several business outcome characteristics. An average inventory characteristic 202 represents an average inventory level for an item. A total replenishment orders generated characteristic 204 represents a count of times that the organization made orders associated with the item to vendors. A total quantity associated with vendor replenishment orders characteristic 206 represents the total quantity ordered from the vendors. A total back orders generated characteristic 208 represents the number of items on back order during a particular time period. A customer wait time characteristic 210 represents, for back ordered items, an average customer wait time, in months, to fill a customer's order for the item. The business outcome 200 can be a combination of values for each of the characteristics 202-210.

Returning to FIG. 1, each of the forecastability strategies 104 can be configured in one or more analysis processes and/or statistical processes that are programmed as software into a simulator (or simulation engine) 106. The simulator 106 can be used to simulate each of the strategies 104 on a set of multiple items and to determine, for each item, which strategy 104 performs best based on business outcome characteristics. For each item, it can be determined whether a forecast model (or which forecast model) results in a better business outcome as compared to using a simple business rule for forecasting. The simulator 106 iterates through time thus "simulating the passage of time." Doing so enables a much more comprehensive and reliable analysis as compared to only simulating the impact over a static time horizon.

As shown in step two 108, the simulator 106 can use historical data obtained from a data repository 110. The repository 110 can, for example, be associated with an ERP (Enterprise Resource Planning) or APS (Advanced Planning and Scheduling) system. The historical data can include, for example, historical demand data, baseline inventory levels, and reorder requisition information for a large number of individual items. The simulator 106 can use the historical data obtained from the repository 110 to simulate the passage of time and to analyze effects of implementing each of the strategies 104 for each item being analyzed by the software routines that form the simulator 106. The simulator 106 can simulate, for example, twelve monthly periods using historical data from a previous thirty-six month time period. For example, in turn, each of the strategies 104 can be configured in the simulator 106 and the simulator 106 can simulate the implementation of a respective strategy 104, using actual historical demands, and can compute business outcome characteristics that result from implementing the respective strategy 104.

In further detail and as other examples, the simulator 106 can use a model fit period of historical demand data to define a strategy 104 and to establish applicable parameters. For each strategy 104, forecasts can be generated by exposing the simulator 106 to a historical demand amount, period by period, as if the demand was actually happening. Forecasts can then be applied exactly as they would be applied in a production APS system, such as generating simulated buys of material one lead time in advance of an anticipated need. Reorder requisitions can be recorded along with an associated dollar value of reorders. Actual demands from a holdout period can be used, for example, to generate forecast accuracy statistics, change inventory position, record unfilled orders, and measure customer wait time.

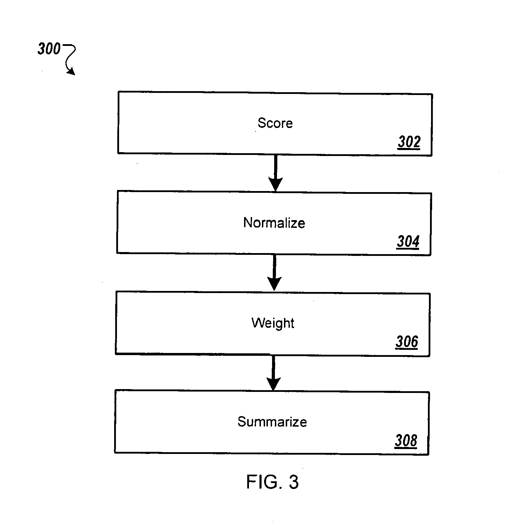

After the simulation has completed, a scoring process can be performed to score results from each strategy 104, for each item. For example, FIG. 3 illustrates an example process 300 for scoring results. The process 300 can be performed, for example, by the simulator 106. For each forecastability strategy and for each item, a score for each business outcome characteristic is computed (302). The business outcome characteristics can include, for example, the average inventory characteristic 202, the total replenishment orders generated characteristic 204, the total quantity associated with vendor replenishment orders characteristic 206, the total back orders generated characteristic 208, and the customer wait time characteristic 210. Other business outcome characteristics can be used, and more or fewer business outcome characteristics can be used. The forecastability strategies can include one or more complex forecast models, and one or more business rules, such as one or more replenishment rules. The score for each business outcome characteristic can be computed for a strategy, for example, by simulating the implementation of the strategy, such as using the simulator 106.

For each forecastability strategy and for each item, the scores for each business outcome characteristic are normalized (304). Normalizing scores can facilitate comparison of scores, across strategies and across business outcome characteristics. To compute normalized scores, for example, for each business outcome characteristic, a median of the scores for the business outcome characteristic can be computed. For each strategy, item, and business outcome characteristic combination, a normalized ratio can be computed by dividing the score for the business outcome characteristic for the strategy and the item by the median score for the business outcome characteristic and then subtracting one from the ratio. For example, suppose a median score for an item for the average inventory characteristic, from simulating five strategies, is forty. Suppose also, that for a first strategy that the average inventory score for the item is forty and that for a second strategy the average inventory score for the item is sixty. The normalized ratios for the item, for the first and second strategies, for the average inventory characteristic, can be calculated as "0" ((40/40) - 1) and "0.5" ((60 /40) -1), respectively.

For each strategy and for each item, the normalized ratios for each business outcome characteristic are weighted (306). For example, the organization can assign weights to each business outcome characteristic, based on an importance of the business outcome characteristic to the organization. The normalized ratio for each business outcome characteristic can be multiplied by the weight assigned to the business outcome characteristic, to compute a set of weighted scores, for each strategy and for each item.

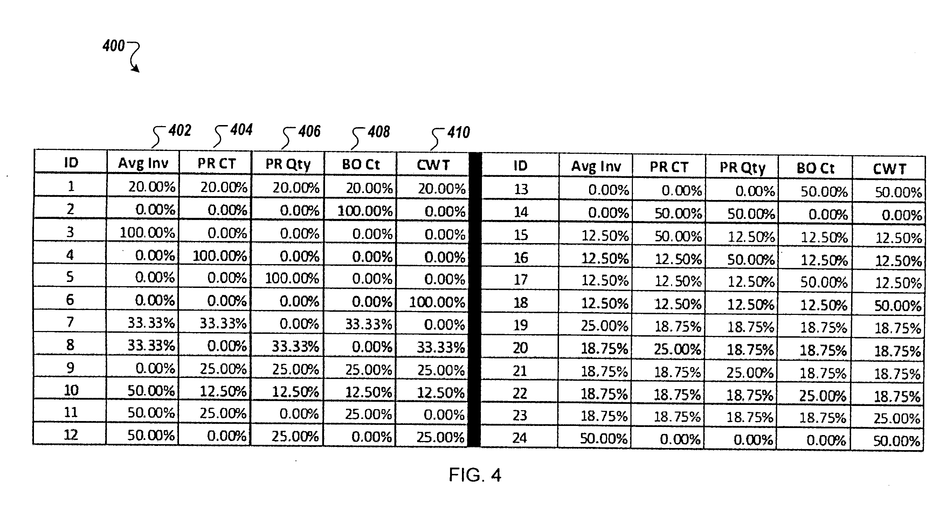

For example, FIG. 4 illustrates a table 400 which includes, in each row, a combination of weights for business outcome characteristics, where the characteristics are represented by columns. For example, the columns 402-410 (e.g., an average inventory ("Avg Inv") column 402, a replenishment count ("PR CT') column 404, a replenishment quantity ("PR Qty") column 406, a back order count ("BO CT") column 408, and a customer wait time ("CWT") column 410) correspond to the business outcome characteristics 202-210, respectively.

An organization can, for example, assign equal weights to each business outcome characteristic, as illustrated by a row with identifier of one (associated with item one being analyzed). As another example, the organization can assign a higher weight to one business outcome characteristic and a lower weight to other business outcome characteristics, as illustrated by rows with identifiers of ten and fifteen to twenty three. As yet another example, the organization can assign a zero weight to one or more business outcome characteristics, as illustrated by rows with identifiers of two to nine, eleven to fourteen, and twenty four. If an organization is concerned with only one business outcome characteristic, the organization can assign a one hundred percent weight to the business outcome characteristic, as illustrated by rows with identifiers of two to six. For example, as illustrated by the row with identifier three, the organization can assign one hundred percent weight to the average inventory characteristic. Assigning such a weight can tend to result in selection of strategies that have historically resulted in smaller average inventory.

Returning to FIG. 3, summary scores are computed, for each strategy and for each item (308). For example, for each strategy and item combination, a summary score can be computed by summing each associated weighted score. In some implementations, a strategy having a lower summary score is classified as better performing for the item as compared to a strategy having a higher summary score.

Returning to FIG. 1, in step three 112, business outcome results received as output from the simulator 106 from each strategy are reviewed. For example, summary scores for each strategy for each item can be compared. For each item, a "best" strategy for the item can be determined, such as a strategy for which the simulation produced a lowest summary score for the item.

In step four 114, the best-performing forecastability strategy 104 can be reported to and approved by an approval body and process (e.g. project management). In a step five 116, the simulator 106 can output an item classification data set 117 which applies the selected forecastability strategy for each item and outputs the forecast model, replenishment model, or other business rule to use for the item. In step six 118, the item classification data set 117 is loaded to a production EPR or APS system, such as to the repository 110, and used for the ongoing management of items.

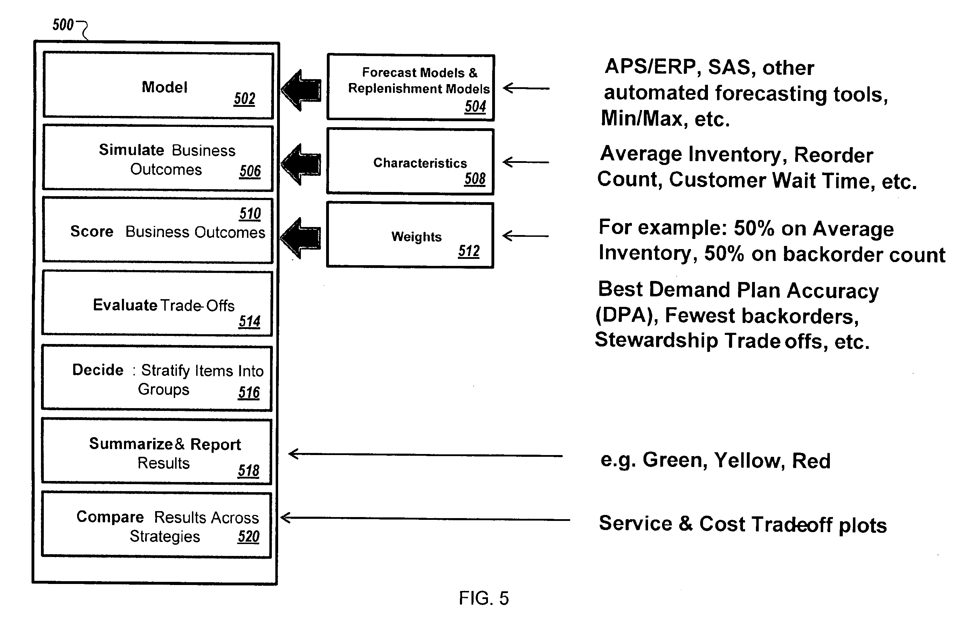

FIG. 5 illustrates components of a simulation system 500. The simulation system 500 includes a model component 502, for accepting definitions of one or more forecast models, replenishment models, or other business rules (e.g., as illustrated by model inputs 504). A simulation component 506 can be used to simulate implementation of the models using historical data. The simulation component 506 can measure business outcome characteristics (e.g., characteristics 508, which can include the characteristics 202-210 with respect to FIG. 2) for each model.

For example, a scoring component 510 can compute summary scores for each of multiple items, for each model. An organization can assign weights 512 to one or more of the characteristics. The scoring component 510 can normalize, weight, and summarize scores, as described above with respect to FIG. 3.

An analyst can use an evaluation component 514 to evaluate business outcome results and other results produced by the simulation component 506. For example, models can be compared based on best demand plan accuracy, a minimum demand plan accuracy cutoff, fewest back orders, stewardship tradeoffs, mean absolute percent error (MAPE), forecast bias, or minimizing unfilled orders, to name a few examples.

A decision component 516 can be used to select or to confirm selection of a model for each item. For example, some items can be classified as forecastable with a particular forecasting model specified. Other items can be classified as non-forecastable with a particular replenishment or other business rule specified. Item classifications can be output from the system 500 and can be loaded, for example, into a production system, for implementation of the selected forecast or replenishment models for respective items.

A reporting component 518 can be used to create one or more reports. For example, an item report can be produced which color codes items according to a forecastable / non-forecastable classification and according to an associated forecast or replenishment model. A comparison component 520 can be used to compare results for an item across strategies, where each strategy may apply different forecasting models to different items. For example, the comparison component 520 can be used to plot service and cost tradeoff information, for results obtained from simulating multiple models.

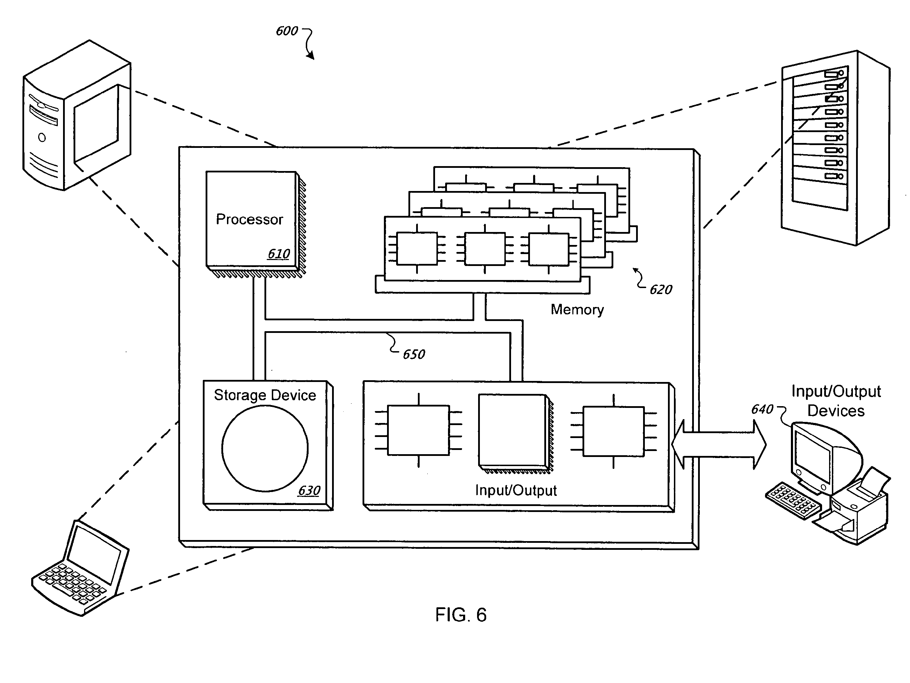

FIG. 6 is a schematic diagram of an example of a generic computer system 600. The system 600 can be used for the operations described in association with the process 300, according to some implementations. The system 600 may be included in the systems 100 and 500.

The system 600 includes a processor 610, a memory 620, a storage device 630, and an input/output device 640. Each of the components 610, 620, 630, and 640 are interconnected using a system bus 650. The processor 610 is capable of processing instructions for execution within the system 600. In one implementation, the processor 610 is a single-threaded processor. In another implementation, the processor 610 is a multi-threaded processor. The processor 610 is capable of processing instructions stored in the memory 620 or on the storage device 630 to display graphical information for a user interface on the input/output device 640.

The memory 620 stores information within the system 600. In one implementation, the memory 620 is a computer-readable medium. In one implementation, the memory 620 is a volatile memory unit. In another implementation, the memory 620 is a non-volatile memory unit.

The storage device 630 is capable of providing mass storage for the system 600. In one implementation, the storage device 630 is a computer-readable medium. In various different implementations, the storage device 630 may be a floppy disk device, a hard disk device, an optical disk device, or a tape device.

The input/output device 640 provides input/output operations for the system 600. In one implementation, the input/output device 640 includes a keyboard and/or pointing device. In another implementation, the input/output device 640 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of implementations have been described. Nevertheless, it will be understood that various modifications may be made without departing from the spirit and scope of the disclosure.

## Claims

1. A computer-implemented method comprising:
receiving a group of predefined forecastability strategies, each forecastability strategy representing a set of rules by which to determine whether each item of a plurality of items within a supply chain management system is to be managed using statistical forecasting;
receiving historical supply chain management data representing past events in a supply chain associated with at least two items selected from the plurality of items within the supply chain management system;
applying each of the forecastability strategies to the historical data in order to generate business outcomes for each of the forecastability strategies;
selecting a forecastability strategy from among the group of forecastability strategies based on the business outcomes; and
implementing the selected forecastability strategy to manage each of the plurality of items within the supply chain management system.

2. The computer-implemented method of claim 1, wherein applying each of the forecastability strategies to the historical data comprises:
for each of the forecastability strategies,
for each of the selected items of the plurality of items,
selecting a forecasting model or non-forecasting rule for inventory management of that item according to the particular forecastability strategy;
simulating inventory management of that item according to the selected model or rule over a period of time represented by the historical data; and
generating one or more business outcomes based on the simulated inventory management of the item.

3. The computer implemented method of claim 2, wherein generating the business outcomes for each of the forecastability strategies involves, for each forecastability strategy, aggregating the business outcomes based on the simulated inventory management of each of the selected items according to the particular forecastability strategy.

4. The computer-implemented method of claim 2 or 3, wherein simulating inventory management over a period of time represents iterating the inventory management over a plurality of management cycles and using the simulated results of each cycle to simulate the results of the next cycle.

5. The computer-implemented method of any one of the preceding claims,
wherein generating business outcomes comprises generating a score representing a weighted average of two or more business characteristics; and
wherein selecting a forecastability strategy comprises comparing the generated scores.

6. The computer-implemented method of claim 5, wherein the business outcome characteristics comprise at least one of average inventory, number of backorders, average customer wait time, number of purchase requisitions, and value of purchase requisitions.

7. The computer-implemented method of claim 5 or 6, wherein each business outcome characteristic is normalized according to a median value for that characteristic.

8. The computer-implemented method of any one of claims 5 to 7, further comprising:
receiving user input specifying the weights to use for each business outcome characteristic; and
using the specified weights to generate the weighted average.

9. The computer-implemented method of any one of the preceding claims, wherein selecting a forecastability strategy comprises:
reporting the business outcomes associated with each of the forecastability strategies to a user; and
receiving user input representing a selection of a forecastability strategy from among the group of forecastability strategies.

10. The computer-implemented method of any one of the preceding claims, wherein implementing the selected forecastability strategy comprises, for each of the plurality of items, selecting a forecasting model or non-forecasting rule for inventory management of that item according to the selected forecastability strategy.

11. The computer-implemented method of any one of the preceding claims, wherein the selected forecastability strategy comprises a first criterion associated with a first forecasting model such that items meeting the first criterion are evaluated according to the first forecasting model, a second criterion associated with a second forecasting model such that items meeting the second criterion are evaluated according to the second forecasting model, and a non-forecasting rule such that at least some items not meeting the first or second criteria are evaluated according to the non-forecasting rule.

12. The computer-implemented method of claim 11, wherein the second forecasting model is a simple moving average statistical model.

13. The computer-implemented method of any one of the preceding claims, wherein the business outcomes for each forecastability strategy are compared against business outcomes for a baseline strategy using one or more non-forecasting rules.

14. A system comprising:
a data repository storing historical supply chain management data representing past events associated with a plurality of items within a supply chain management system;
a simulation engine that receives a group of predefined forecastability strategies, accesses the historical management data, and applies each of the forecastability strategies to the historical data in order to generate business outcomes for each of the forecastability strategies: and
one or more computers and one or more storage devices storing instructions that are operable, when executed by the one or more computers, to cause the one or more computers to perform operations comprising:
selecting a forecastability strategy from among the group of forecastability strategies based on the business outcomes generated by the simulation engine;
and
implementing the selected forecastability strategy to manage each of the plurality of items within the supply chain management system.

15. A non-transitory computer-readable medium storing software comprising instructions executable by one or more computers which, upon such execution, cause the one or more computers to perform operations according to any one of claims 1 to 13.
